(19) **Europäisches Patentamt** / **European Patent Office** / **Office européen des brevets**

(11) **EP 3 427 189 B1**

(12) **FASCICULE DE BREVET EUROPÉEN**

(45) Date de publication et mention
de la délivrance du brevet:
**29.04.2020 Bulletin 2020/18**

(51) Int Cl.:
**G06K 19/07** *(2006.01)* **G06K 19/073** *(2006.01)*
**G06K 19/077** *(2006.01)*

(21) Numéro de dépôt: **17714843.4**

(22) Date de dépôt: **09.03.2017**

(86) Numéro de dépôt international:
**PCT/FR2017/000046**

(87) Numéro de publication internationale:
**WO 2017/153644 (14.09.2017 Gazette 2017/37)**

(54) **CARTE À PUCE SANS CONTACT À CONTRÔLE DIGITAL**

FINGERGESTEUERTE KONTAKTLOSE CHIPKARTE

FINGER-CONTROLLED CONTACTLESS CHIP CARD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.03.2016 FR 1600398**

(43) Date de publication de la demande:
**16.01.2019 Bulletin 2019/03**

(73) Titulaire: **Smart Packing Solutions
13790 Rousset (FR)**

(72) Inventeurs:
• **DANLER-BAUMGARTNER, Stephan
13790 Rousset (FR)**

• **MEAR, Benjamin
13790 Rousset (FR)**
• **TEBOUL, Deborah
13790 Rousset (FR)**

(74) Mandataire: **Nicolle, Olivier
Ipon Global
29, boulevard Georges Seurat
92200 Neuilly-sur-Seine (FR)**

(56) Documents cités:
**FR-A1- 2 919 409 FR-A1- 2 982 687
US-A1- 2009 277 964 US-B1- 6 424 029**

## Description

### Domaine de l'invention :

La présente invention concerne le domaine des cartes à puce à fonctionnement sans contact ou à fonctionnement mixte à contact et sans contact, qui sont capables d'interagir avec un lecteur de cartes à puce au moyen d'une communication radiofréquence. Dans la mesure où elles ont toutes au moins une interface de communication sans contact, on les désignera toutes sous la dénomination de "cartes sans contact" pour simplifier l'exposé.

Certaines de ces cartes sont utilisées pour des applications sensibles, par exemple des cartes sans contact utilisées pour des applications bancaires comme le paiement sans contact.

Un problème qui limite l'usage des cartes sans contact pour effectuer des paiements réside dans le fait que les utilisateurs craignent, quelquefois à juste titre, qu'un tiers placé à proximité puisse utiliser la carte à leur insu, par une opération dite de "skimming" en terminologie anglo-saxonne. Cette opération consiste à faire réagir voire à utiliser la carte au moyen d'un lecteur sans contact, à l'insu de son propriétaire.

### Etat de la technique :

Des techniques dites "d'antiskimming" susceptibles de s'opposer à un usage intempestif de la carte ont déjà été développées notamment dans le cadre des documents de sécurité de type passeport électronique, qui se présentent sous la forme d'un livret. En effet, comme le prévoit le brevet FR 2919409, l'antenne qui permet la communication radiofréquence du document est placée à cheval sur les deux couvertures du passeport, de sorte que lorsque celui-ci est en position fermée, l'antenne se replie sur elle-même et empêche tout fonctionnement radiofréquence.

Une telle solution n'est pas applicable à des cartes à puce, qui ne sont pas repliables.

On connait également des étuis métalliques pour carte à puce, formant une cage de Faraday autour de la carte à puce lorsque celle-ci y est rangée, mais son usage n'est pas très pratique.

D'autres solutions ont été imaginées, dans lesquelles la carte à puce est pourvue d'un bouton de type marche/arrêt, permettant de déconnecter manuellement les circuits électroniques ou l'antenne de la carte à puce. Mais ces solutions sont difficiles à industrialiser. En particulier, la mise en place de boutons marche/arrêt pose des problèmes de fiabilité et de coût.

On connait en outre de par les documents US 2009/277964 A1, FR 2 982 687 A1 ou US 6 424 029 B1, des solutions dans lesquelles une carte à puce sans contact possède une puce directement connectée à une antenne, et un moyen de contrôle externe, comme un doigt, pour modifier la fréquence de résonance de l'antenne.

Mais ces solutions sont relativement inefficaces, car, l'antenne restant toujours connectée à la puce, il suffit d'augmenter la puissance du dispositif d'interrogation de la carte, pour rétablir un échange de puissance et/ou de données avec la carte à puce, ce qui limite la sécurité de celle-ci.

### Buts de l'invention :

La présente invention a pour but général de résoudre les problèmes posés et de proposer une carte à puce permettant d'éviter tout usage à l'insu de son propriétaire, tout en offrant une solution simple et fiable, en particulier sans bouton poussoir et autres pièces rapportées, tout en augmentant le niveau de sécurité du produit.

Un autre but de l'invention est de proposer une solution facile à industrialiser avec un rendement de fabrication et une fiabilité élevés.

### Objet de l'invention :

Dans son principe, l'invention consiste à concevoir le circuit radiofréquence de la carte en y intégrant une antenne booster non connectée électriquement à l'antenne du module électronique, et à choisir les paramètres de fonctionnement de telle manière que l'ensemble constitué par le module électronique et l'antenne booster est par défaut désaccordé, et que seule la modification volontaire de la capacité d'accord par l'utilisateur va permettre d'accorder la fréquence de résonance du produit avec la fréquence de résonance des lecteurs de carte à puce, de façon à permettre la communication sans contact entre la carte et le lecteur.

De façon innovante, cette modification volontaire de la capacité d'accord consiste à utiliser la capacité d'un ou de plusieurs doigt(s) de l'utilisateur et à simplement poser un ou plusieurs doigt(s) à un ou plusieurs endroit(s) déterminé(s) de la carte à puce, ce qui aura grâce à l'invention l'effet de réaccorder la fréquence de résonance de la carte à puce de manière à permettre son fonctionnement.

L'invention a par conséquent pour objet une carte à puce à fonctionnement sans contact, destinée à communiquer avec un lecteur de carte à puce fonctionnant à une fréquence de résonance $F_0$', ladite carte à puce étant pourvue d'un corps de carte intégrant au moins une antenne connectée en série ou en parallèle avec une capacité, les valeurs des inductances des antennes et la valeur de la capacité étant choisies pour obtenir une fréquence de résonance $F_0$ suffisamment éloignée de la fréquence du signal émis par le lecteur pour limiter la communication radiofréquence avec le lecteur, de sorte que la carte à puce se trouve par défaut désaccordée par rapport au lecteur, et les valeurs desdites inductances et capacité étant en outre choisies pour que la connexion en parallèle d'une capacité supplémentaire $C_d$ prédéterminée ramène la fréquence de résonance de la carte au voisinage de la fréquence $F_0$' du signal

émis par ledit lecteur de sorte que la carte à puce se trouve réaccordée avec le lecteur, caractérisée en ce que la carte à puce comporte une antenne booster pourvue d'une antenne principale d'inductance $L_1$ et d'une antenne concentrateur d'inductance $L_2$, connectées en série ou en parallèle avec une capacité C, et en ce que les valeurs de $L_1$, $L_2$ et C sont choisies d'une part pour obtenir ladite fréquence de résonance $F_0$, et d'autre part pour que la connexion en parallèle de ladite capacité $C_d$ prédéterminée ramène la fréquence de résonance de la carte au voisinage de ladite fréquence $F_0'$ du signal émis par ledit lecteur.

De cette manière, l'antenne booster permet de supprimer toute connexion physique avec l'antenne du module connectée à la puce microélectronique, et le fait que l'ajustement de fréquence de résonance se fasse par une capacité $C_d$ connectée à l'antenne booster et non pas à l'antenne du module, permet de rendre l'accordement et le dés accordement avec le lecteur beaucoup plus efficace, tout en permettant un procédé de fabrication de la carte à puce plus fiable et plus efficace que dans le cas d'une carte sans antenne booster.

De façon avantageuse, ladite capacité $C_d$ prédéterminée pour ramener la fréquence de résonance de la carte au voisinage de la fréquence $F_0'$ du signal émis par ledit lecteur correspond à la capacité d'un ou de plusieurs doigts posés entre des contacts métalliques de la carte. De cette manière, il suffit à l'utilisateur de poser un doigt à un endroit prédéterminé de la carte à puce, ou une combinaison de doigts à plusieurs endroits prédéterminés de la carte, pour permettre son fonctionnement avec un lecteur sans contact.

On a constaté que la capacité prédéterminée $C_d$ a de préférence une valeur de l'ordre de 7 picofarad, qui peut être réalisée en posant un doigt à cheval sur un dipôle électrique inséré en parallèle de la capacité principale C de l'antenne.

Selon un mode de réalisation particulier de l'invention, les valeurs de $L_1$, $L_2$ et C sont choisies telles que $L_1 + L_2$ soit supérieure ou égale à 4 $\mu$H, et que C soit de l'ordre de 20 picofarad.

Selon un premier mode de réalisation, la capacité $C_d$ est réalisée sous la forme d'un fil métallique incrusté sur le support d'antenne et disposé sous la forme d'un serpentin, localisé par un repère sur une face de la carte à puce.

Selon un second mode de réalisation, la capacité $C_d$ est réalisée sous la forme d'un couple de demi-pastilles métalliques disposées en face l'une de l'autre de manière qu'un doigt posé à cheval sur les demi-pastilles crée une capacité d'ajustement $C_d$ connectée en parallèle de la capacité C de l'antenne. Selon une variante de ce second mode de réalisation, la capacité $C_d$ est réalisée sous la forme de plusieurs couples de demi-pastilles métalliques disposées en face l'une de l'autre de manière qu'une combinaison de plusieurs doigts posés à cheval sur plusieurs couples de demi-pastilles crée une capacité d'ajustement $C_d$ de l'ordre de 7 pF connectée en parallèle de la capacité C de l'antenne.

L'invention sera mieux comprise à la lecture de la description qui suit, et des dessins, dans lesquels :

- la Figure 1 représente le schéma électrique équivalent d'une carte à puce sans contact selon l'invention ;
- la figure 2 représente un premier mode de réalisation de l'antenne de la carte à puce selon l'invention ;
- la figure 3 représente un second mode de réalisation de l'antenne de la carte à puce selon l'invention.

**Description détaillée de l'invention :**

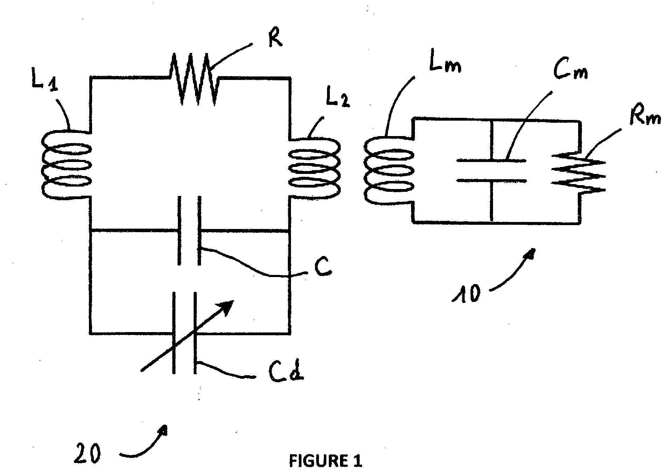

On a représenté sur la figure 1 le schéma électrique équivalent d'une carte à puce, comprenant un module électronique 10 pourvu d'une puce électronique (non représentée) et d'une antenne, et une antenne booster 20 disposée dans le corps de carte.

Le module électronique 10 est équivalent à un circuit RLC, avec une résistance $R_m$, une capacité $C_m$, et une inductance $L_m$ connectées en parallèle.

L'antenne booster 20 comporte une antenne concentrateur d'inductance $L_2$ (et notée $L_2$), couplée avec l'antenne $L_m$ du module, une résistance R, une antenne d'inductance $L_1$ et notée $L_1$, et une capacité C. L'antenne $L_1$ a des spires de grande taille, généralement disposées sur le pourtour du corps de carte, selon un format dit ID1, conforme à la norme ISO/CEI 7810. Ce format ID1 correspond à des cartes de dimensions 85,60 x 53,98 mm.

Dans le schéma équivalent est également représentée une capacité variable $C_d$ aux bornes de l'antenne booster 20. Il s'agit de la capacité formée par le ou les doigt(s) de l'utilisateur, lorsque ce doigt ou ces doigts est/sont placé(s) sur la carte.

Selon l'invention, le ou les doigts sera/seront placés sur des repères visuels imprimés sur le corps de carte en regard d'un ou de plusieurs dipôle(s) électriques formé(s) par deux plots de métal placés côte à côte, de telle manière qu'en l'absence du doigt de l'utilisateur, on soit en présence d'un circuit ouvert (ce qui correspond à une capacité $C_d$ nulle), et qu'en présence du doigt de l'utilisateur, on soit en présence d'une capacité $C_d$ non nulle de quelques picofarads.

L'invention prévoit en effet de faire intervenir la capacité du doigt de l'utilisateur comme interrupteur permettant le fonctionnement de la carte en mode sans contact.

Il a en effet été constaté que la capacité du doigt peut être relativement stable d'un utilisateur à l'autre, et en fonction des conditions d'humidité ou autres. Des tests ont montré que la capacité d'un doigt varie sensiblement dans une plage de 6,5 à 7,5 pF pour une surface de dipôle donnée.

L'invention met à profit cette caractéristique en choisissant pour les composants $L_1$, $L_2$ et C de l'antenne booster 20 de la carte, des valeurs qui entrainent une fréquence de résonance fortement décalée par rapport à la fréquence de résonance du lecteur, ce qui implique que la carte est par défaut désaccordée par rapport au lecteur.

Ainsi, la fréquence de résonance de l'antenne booster 20 est du type :

$$F_0 = 1/(2 * \Pi * \sqrt{(L_1 + L_2)} * C$$

Par conséquent, si la fréquence de fonctionnement du lecteur de carte à puce est de l'ordre de 13,56 Mhz comme cela est souvent le cas dans le domaine des cartes sans contact et de leurs lecteurs, les valeurs de $L_1$, $L_2$ et C seront choisies pour qu'en l'absence du doigt de l'utilisateur (c'est à dire $C_d$ = 0), on obtienne une fréquence de résonance de l'antenne booster 20 distante de plus de 1 Mhz par rapport à la fréquence cible de 13,56 Mhz.

Avec une telle fréquence de résonance décalée, la carte à puce sera désaccordée par rapport au lecteur et ne pourra pas communiquer avec le lecteur de carte à puce, sans modification volontaire du circuit résonant susceptible de ramener la fréquence de résonance de l'antenne booster au voisinage de 13,56 Mhz.

Cette modification sera apportée par l'apport de la capacité $C_d$ amenée par un ou plusieurs doigts de l'utilisateur.

En effet, la fréquence de résonance de l'antenne booster lorsqu'un doigt est positionné sur la carte sera exprimée par la formule :

$$F_0' = 1/(2 * \Pi * \sqrt{(L_1 + L_2)} * (C + C_d)$$

sachant que les dipôles électriques où seront posés le ou les doigts pourront être configurés pour que la capacité supplémentaire $C_d$ soit de l'ordre de 7 pF.

Il est donc possible de déterminer un ensemble de valeurs de $L_1$, $L_2$ et C qui amènent une fréquence de résonance $F_0$ supérieure ou égale à 14,7 Mhz, et une valeur $F_0'$ (prenant en compte une valeur $C_d$ de l'ordre de 7 picofarad) égale à 13,56 Mhz.

Des couples de valeurs testées et qui fonctionnent sont par exemple comme suit :

$L_1$ + $L_2$ supérieure ou égale à 4 $\mu$H
C environ égale à 20 pF.

Bien entendu d'autres ensembles de valeurs sont possibles et seront aisément déterminées par l'homme du métier. Il faut simplement que l'inductance $L_1$ + $L_2$ soit très grande (au moins 4$\mu$H), afin qu'une petite variation de la capacité C provoque une variation significative de la fréquence de résonance $F_0$).

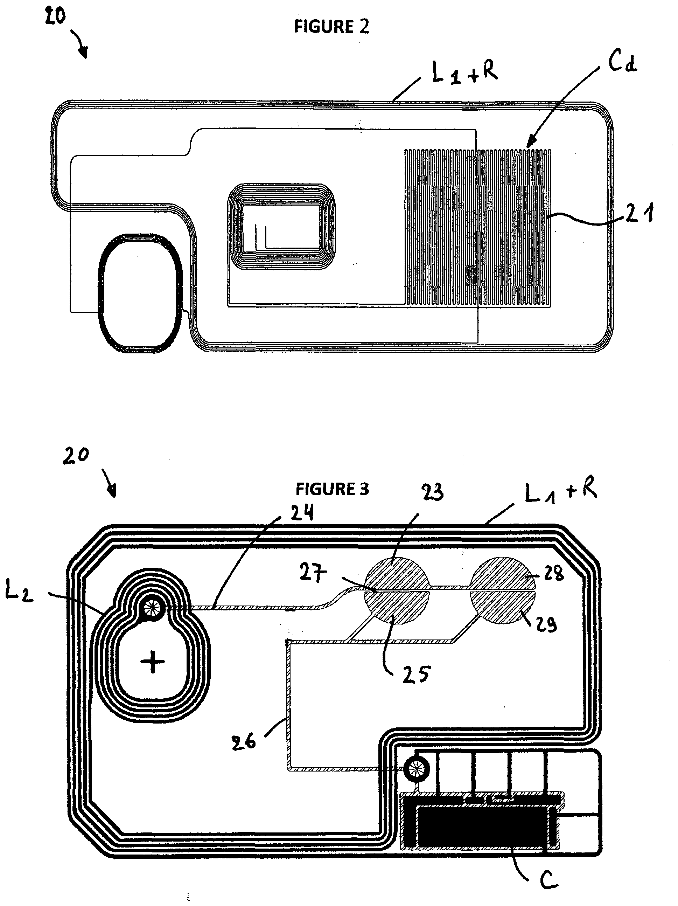

On a représenté sur la figure 2 un premier mode de réalisation d'une antenne booster 20 pour carte à puce intégrant une capacité $C_d$ réalisée sous une forme filaire, par des fils métalliques 21 très fins incrustés par ultrasons sur le film support d'antenne, et disposés en serpentin ou sinusoïde très resserrée.

Afin de matérialiser la disposition de cette capacité filaire, un repère visuel (non représenté) sera placé sur une face externe de la carte à puce, en regard de la capacité $C_d$. Ainsi l'utilisateur saura où placer son doigt pour réaccorder la carte à puce sur la fréquence cible, par exemple de 13,56 Mhz en l'occurrence.

On a représenté en figure 3 une antenne booster 20 avec un second mode de réalisation de la capacité $C_d$, sous la forme d'un circuit métallique gravé en même temps que les pistes métalliques des antennes $L_1$, $L_2$, et connecté en parallèle entre $L_1$ et $L_2$.

Ce circuit métallique gravé comporte au moins un dipôle formé par une première demi-pastille métallique 23 connectée à l'antenne $L_2$ par une piste 24, et une seconde demi-pastille 25 connectée à l'antenne $L_1$ par une piste 26. Les deux demi-pastilles 23, 25 sont séparées par un espace 27 qui fait que leur capacité est nulle en l'absence d'un doigt posé à cheval sur les deux demi-pastilles, et que leur capacité $C_d$ est égale à environ 7 pF lorsqu'un doigt est posé à cheval sur les deux demi-pastilles 23,25.

Là encore, il sera utile de marquer l'emplacement des deux demi-pastilles 23,25 par un repère approprié sur une face externe de la carte à puce, pour guider l'utilisateur.

Dans les deux modes de réalisation de la capacité $C_d$ selon les figures 2 et 3, il serait possible (comme schématisé sur la figure 3 par les demi-pastilles 28, 29) de scinder la capacité $C_d$ en plusieurs portions réalisées sous forme filaire ou sous forme gravée, en plusieurs sous-ensembles connectés en parallèle, afin de devoir utiliser une combinaison de plusieurs doigts placés à différents endroits de la carte, pour reconstituer une capacité équivalente de l'ordre de 7 pF. En outre, cela permettrait de renforcer encore la sécurité de la carte à puce, en faisant en sorte que seul un placement volontaire de plusieurs doigts de l'utilisateur en face des différentes portions d'antenne constituant la capacité d'accord $C_d$.

**Avantages de l'invention :**

L'invention atteint les buts fixés. Le choix des composants pour amener la fréquence de résonance de l'antenne booster éloignée de la fréquence de résonance du lecteur permet d'assurer que la carte ne peut pas fonctionner et donc faire de transactions en l'état. Par contre, le fait de poser le doigt sur la carte pour créer une capacité d'ajustement additionnelle $C_d$ ramène la fréquence de résonance dans une plage permettant le fonctionnement de la carte avec le lecteur, avec les performances de distance et de qualité de communication habituellement requises.

En outre, l'invention est particulièrement facile à mettre en oeuvre, puisqu'elle ne nécessite aucune modification de structure de la carte, mais seulement un choix particulier des valeurs des composants L, C de son antenne booster.

**Revendications**

1. Carte à puce à fonctionnement sans contact, destinée à communiquer avec un lecteur de carte à puce fonctionnant à une fréquence de résonance $F_0'$, ladite carte à puce étant pourvue d'un corps de carte intégrant au moins une antenne connectée en série ou en parallèle avec une capacité, les valeurs des inductances des antennes et la valeur de la capacité étant choisies pour obtenir une fréquence de résonance $F_0$ suffisamment éloignée de la fréquence du signal émis par le lecteur pour limiter la communication radiofréquence avec le lecteur, de sorte que la carte à puce se trouve par défaut désaccordée par rapport au lecteur, et les valeurs desdites inductances et capacité étant en outre choisies pour que la connexion en parallèle d'une capacité supplémentaire $C_d$ prédéterminée ramène la fréquence de résonance de la carte au voisinage de la fréquence $F_0'$ du signal émis par ledit lecteur de sorte que la carte à puce se trouve réaccordée avec le lecteur, **caractérisée en ce que** la carte à puce comporte une antenne booster (20) pourvue d'une antenne principale d'inductance $L_1$ et d'une antenne concentrateur d'inductance $L_2$, connectées en série ou en parallèle avec une capacité C, et **en ce que** les valeurs de $L_1$, $L_2$ et C sont choisies d'une part pour obtenir ladite fréquence de résonance $F_0$, et d'autre part pour que la connexion en parallèle de ladite capacité $C_d$ prédéterminée ramène la fréquence de résonance de la carte au voisinage de ladite fréquence $F_0'$ du signal émis par ledit lecteur.

2. Carte à puce selon la revendication 1, **caractérisée en ce que** ladite capacité $C_d$ prédéterminée pour ramener la fréquence de résonance de la carte au voisinage de la fréquence $F_0'$ du signal émis par ledit lecteur, corresponde à la capacité d'un doigt posé entre deux contacts métalliques (23,25) de la carte.

3. Carte à puce selon la revendication 2, **caractérisée en ce que** la capacité prédéterminée $C_d$ a une valeur de l'ordre de 7 picofarad.

4. Carte à puce selon l'une quelconque des revendications 1 à 3, **caractérisée en ce que** les valeurs de $L_1$, $L_2$ et C soient choisies telles que $L_1 + L_2$ soit supérieure ou égale à 4 $\mu$H, et que C soit de l'ordre de 20 picofarad.

5. Carte à puce selon l'une quelconque des revendications précédentes, **caractérisée en ce que** la capacité $C_d$ est réalisée sous la forme d'un fil métallique (21) incrusté sur le support d'antenne et disposé sous la forme d'un serpentin, localisé par un repère sur une face de la carte à puce.

6. Carte à puce selon l'une quelconque des revendications 1 à 4, **caractérisée en ce que** la capacité $C_d$ est réalisée sous la forme d'au moins deux demi-pastilles métalliques (23,25) disposées en face l'une de l'autre de manière qu'un doigt posé à cheval sur les demi-pastilles crée une capacité d'ajustement $C_d$ de l'ordre de 7 pF connectée en parallèle de la capacité C de l'antenne.

7. Carte à puce selon la revendication 6, **caractérisée en ce que** la capacité $C_d$ est réalisée sous la forme de plusieurs couples de demi-pastilles métalliques (23,25; 28,29) disposées en face l'une de l'autre de manière qu'une combinaison de plusieurs doigts posés à cheval sur plusieurs couples de demi-pastilles crée une capacité d'ajustement $C_d$ de l'ordre de 7 pF connectée en parallèle de la capacité C de l'antenne.

**Patentansprüche**

1. Kontaktlos funktionierende Chipkarte, die dazu bestimmt ist, mit einem Chipkartenlesegerät zu kommunizieren, das mit einer Resonanzfrequenz $F_0'$ funktioniert, wobei die Chipkarte mit einem Kartenkörper versehen ist, der mindestens eine Antenne beinhaltet, die mit einer Kapazität in Reihe oder parallel geschaltet ist, wobei die Werte der Induktivitäten der Antennen und der Wert der Kapazität gewählt werden, um eine Resonanzfrequenz $F_0$ zu erhalten, die ausreichend weit von der Frequenz des vom Lesegerät ausgesendeten Signals entfernt ist, um die Funkfrequenzkommunikation mit dem Lesegerät zu begrenzen, so dass die Chipkarte standardmäßig nicht auf das Lesegerät abgestimmt ist, und die Werte der Induktivitäten und der Kapazität ferner gewählt werden, damit das Parallelschalten einer zusätzlichen vorbestimmten Kapazität $C_d$ die Resonanzfrequenz der Karte in die Nähe der Frequenz $F_0'$ des vom Lesegerät ausgesendeten Signals zurückführt, so dass die Chipkarte wieder auf das Lesegerät abgestimmt ist, **dadurch gekennzeichnet, dass** die Chipkarte eine Boosterantenne (20) umfasst, die mit einer Hauptantenne mit der Induktivität $L_1$ und einer bündelnden Antenne mit der Induktivität $L_2$ versehen ist, die mit einer Kapazität C in Reihe oder parallel geschaltet sind, und dass die Werte von $L_1$, $L_2$ und C zum einen gewählt werden, um die Resonanzfrequenz $F_0$ zu erhalten, und zum anderen, damit die Parallelschaltung der vorbestimmten Kapazität $C_d$ die Resonanzfrequenz der Karte in die Nähe der Frequenz $F_0'$ des vom Lesegerät ausgesendeten Signals zurückführt.

**2.** Chipkarte nach Anspruch 1, **dadurch gekennzeichnet, dass** die vorbestimmte Kapazität $C_d$ zum Zurückführen der Resonanzfrequenz der Karte in die Nähe der Frequenz $F_0$' des vom Lesegerät ausgesendeten Signals der Kapazität eines Fingers entspricht, der zwischen zwei Metallkontakten (23, 25) der Karte aufgelegt wird.

**3.** Chipkarte nach Anspruch 2, **dadurch gekennzeichnet, dass** die vorbestimmte Kapazität $C_d$ einen Wert in der Größenordnung von 7 Picofarad hat.

**4.** Chipkarte nach einem der Ansprüche 1 bis 3, **dadurch gekennzeichnet, dass** die Werte von $L_1$, $L_2$ und C so gewählt werden, dass $L_1 + L_2$ größer oder gleich 4 $\mu$H ist und dass C in der Größenordnung von 20 Picofarad liegt.

**5.** Chipkarte nach einem der vorhergehenden Ansprüche, **dadurch gekennzeichnet, dass** die Kapazität $C_d$ in Form eines Metalldrahts (21) ausgeführt ist, der auf dem Antennenträger eingebettet ist und in Form einer Schlange angeordnet ist, die durch eine Markierung auf einer Seite der Chipkarte lokalisiert wird.

**6.** Chipkarte nach einem der Ansprüche 1 bis 4, **dadurch gekennzeichnet, dass** die Kapazität $C_d$ in Form von mindestens zwei Metallplättchenhälften (23, 25) ausgeführt ist, die einander gegenüber so angeordnet sind, dass ein aufgelegter Finger, der sich über die Plättchenhälften erstreckt, eine Anpassungskapazität $C_d$ in der Größenordnung von 7 pF erzeugt, die parallel zur Kapazität C der Antenne geschaltet ist.

**7.** Chipkarte nach Anspruch 6, **dadurch gekennzeichnet, dass** die Kapazität $C_d$ in Form von mehreren Metallplättchenhälftenpaaren (23, 25; 28, 29) ausgeführt ist, die einander gegenüber so angeordnet sind, dass eine Kombination mehrerer aufgelegter Finger, die sich über mehrere Plättchenhälftenpaare erstrecken, eine Anpassungskapazität $C_d$ in der Größenordnung von 7 pF erzeugt, die parallel zur Kapazität C der Antenne geschaltet ist.

**Claims**

**1.** Chip card with contactless operation, intended to communicate with a chip card reader operating at a resonant frequency $F_0$', said chip card being provided with a card body incorporating at least one antenna connected in series or in parallel with a capacitor, the values of the inductances of the antennae and the capacitance of the capacitor being chosen so as to achieve a resonant frequency $F_0$ remote enough from the frequency of the signal emitted by the reader to limit radiofrequency communication with the reader, such that the chip card is detuned by default with respect to the reader, and the values of said inductances and capacitor furthermore being chosen so that the connection, in parallel, of a predetermined additional capacitance $C_d$ brings the resonant frequency of the card close to the frequency $F_0$' of the signal emitted by said reader, such that the chip card is retuned with the reader, **characterized in that** the chip card includes a booster antenna (20) provided with a main antenna with inductance $L_1$ and with a concentrator antenna with inductance $L_2$ that are connected in series or in parallel with a capacitor C, and **in that** the values of $L_1$, $L_2$ and C are chosen firstly so as to achieve said resonant frequency $F_0$ and secondly so that the connection, in parallel, of said predetermined capacitance $C_d$ brings the resonant frequency of the card close to said frequency $F_0$' of the signal emitted by said reader.

**2.** Chip card according to Claim 1, **characterized in that** said predetermined capacitance $C_d$ for bringing the resonant frequency of the card close to the frequency $F_0$' of the signal emitted by said reader corresponds to the capacitance of a finger placed between two metal contacts (23, 25) of the card.

**3.** Chip card according to Claim 2, **characterized in that** the predetermined capacitance $C_d$ has a value of the order of 7 picofarads.

**4.** Chip card according to any one of Claims 1 to 3, **characterized in that** the values of $L_1$, $L_2$ and C are chosen such that $L_1 + L_2$ is greater than or equal to 4 $\mu$H, and that C is of the order of 20 picofarads.

**5.** Chip card according to any one of the preceding claims, **characterized in that** the capacitor $C_d$ is produced in the form of a metal wire (21) embedded in the antenna carrier and arranged in the form of a coil, located by a marker on a face of the chip card.

**6.** Chip card according to any one of Claims 1 to 4, **characterized in that** the capacitor $C_d$ is produced in the form of at least two metal half-dots (23, 25) arranged facing one another such that a finger placed straddling the half-dots creates an adjusting capacitance $C_d$ of the order of 7 pF that is connected in parallel with the capacitor C of the antenna.

**7.** Chip card according to Claim 6, **characterized in that** the capacitor $C_d$ is produced in the form of several pairs of metal half-dots (23, 25; 28, 29) arranged facing one another such that a combination of several fingers placed straddling several pairs of half-dots creates an adjusting capacitance $C_d$ of the order of 7 pF that is connected in parallel with the capacitor

**EP 3 427 189 B1**

C of the antenna.

**FIGURE 1**

**FIGURE 2**

**FIGURE 3**

**RÉFÉRENCES CITÉES DANS LA DESCRIPTION**

**Documents brevets cités dans la description**

- FR 2919409
- US 2009277964 A1
- FR 2982687 A1
- US 6424029 B1